# DEMANDE DE BREVET EUROPEEN

(11) **EP 0 691 564 A1**
(43) Date de publication de la demande: **10.01.1996**
(21) Numéro de dépôt: 95401597.0
(22) Date de dépôt: 04.07.1995
(51) Int. Cl.: G02F 1/1341

(54) **Procédé de garnissage d'une cellule d'affichage à cristaux liquides**

(30) Priorité: 06.07.1994 FR 9408344
(71) Demandeur: FRANCE TELECOM, F-75015 Paris (FR)
(72) Inventeur: Vinouze, Bruno, F-22710 Port Blanc (FR); Guilbert, Martine, F-22560 Trebeurden (FR); Bosc, Dominique, F-22300 Lannion (FR)
(74) Mandataire: Dubois-Chabert, Guy

(57) **Abrégé**

Procédé de garnissage d'une cellule d'affichage à cristaux liquides (1), caractérisé en ce qu'il comporte les opérations suivantes :
- fourniture d'une cellule d'affichage (1) vide comportant en des extrémités opposées un premier orifice (6) dit de pompage et un second orifice (8) dit de remplissage,
- immersion du second orifice (8) dans un liquide de remplissage comprenant un mélange de monomère et de cristaux liquides, et aspiration par le premier orifice (6) du liquide de remplissage,
- polymérisation du monomère.

Application à la fabrication d'écrans d'affichage.

## Description

### Domaine technique

La présente invention concerne un procédé de garnissage de cellules d'affichage à cristaux liquides. Elle concerne en particulier le garnissage de cellules avec des cristaux liquides dispersés dans un polymère.

### Etat de la technique antérieure

Les cellules d'affichage à cristaux liquides connues comportent en général deux plaques reliées entre elles par un joint de colle disposé en une région périphérique des plaques.

Les plaques, en verre de préférence, comportent des motifs conducteurs qui définissent des points images.

L'application d'une tension sur les motifs des points images permet d'orienter les cristaux liquides contenus dans l'espace situé entre les plaques et délimité par le joint de colle.

Une étape importante de la fabrication des cellules d'affichage à cristaux liquides est le garnissage de ces cellules. On entend par garnissage, non seulement le remplissage des cellules mais aussi toutes les opérations nécessaires après le remplissage pour rendre les cellules fonctionnelles.

On connaît un premier type de cellules d'affichage dit cellules à cristaux liquides nématiques en hélice ("Twisted Nematic" ou TN en abrégé). Dans ce cas, le garnissage des cellules se résume, pour l'essentiel, à leur remplissage avec le cristal liquide.

On connaît aussi des cellules dites à cristaux liquides dispersés dans un polymère ou PDLC. Les PDLC sont une famille de cristaux liquides nouvelle utilisée notamment dans des matrices actives. Le garnissage des cellules du type PDLC consiste, tout d'abord, dans le remplissage de la cellule avec un mélange de cristaux liquides et de monomère photosensible. Lorsque la cellule est pleine, elle est exposée à un rayonnement ultraviolet pour polymériser le monomère. Lors de cette polymérisation, le cristal liquide forme des gouttelettes d'environ 1 µm de diamètre. On appelle ce phénomène la séparation de phase par polymérisation.

De façon connue, pour remplir la cellule d'affichage, celle-ci est introduite dans une enceinte qui est pompée pour obtenir un vide. La cellule d'affichage, qui comporte en sa partie inférieure une ouverture, où queusot, est maintenue dans l'enceinte et est également vidée lors de ce pompage. La partie inférieure de la cellule qui comporte l'ouverture est ensuite plongée dans une cuve située dans l'enceinte et contenant le liquide de remplissage, par exemple le cristal liquide. Un gaz sec est ensuite introduit dans l'enceinte jusqu'à l'obtention de la pression atmosphérique dans celle-ci. Comme il subsiste à l'intérieur de la cellule un vide partiel, le liquide de remplissage où le cristal liquide est aspiré à l'intérieur de la cellule par le queusot.

Lorsque la cellule est remplie, on retire le queusot de la cuve.

Ce procédé de remplissage, bien qu'étant assez répandu, présente un certain nombre d'inconvénients. Il se peut que, par exemple, bien que la pression à l'intérieur de l'enceinte soit suffisamment basse, le pompage de la cellule ne soit pas parachevé. Les gaz qui restent dans la cellule ont alors tendance, après le remplissage, à former des bulles dans la cellule, ce qui peut nuire à son bon fonctionnement.

On peut noter, en outre, des effets nocifs de la basse pression sur les cristaux liquides. En-dessous d'une certaine valeur, le liquide de remplissage ou le cristal liquide peut être altéré dans ses qualités électro-optiques. Une augmentation de la tension de seuil de la cellule d'affichage et de la viscosité du cristal peuvent également être induites. Ce phénomène est particulièrement sensible lors de la réalisation de cellules du type PDLC. En effet, lorsque le monomère contenu dans le liquide de remplissage est soumis à une basse pression, celui-ci s'évapore lors de l'opération de remplissage.

Les procédés de remplissage ou de garnissage traditionnellement utilisés pour les cellules à cristaux liquides nématiques en hélice qui mettent en oeuvre un vide secondaire sont donc incompatibles avec les caractéristiques du mélange de cristal liquide et de monomère.

Une autre difficulté qui apparaît lors du garnissage des cellules, est celle de l'obtention de cellules dont l'épaisseur est constante et uniforme. L'obtention de cellules avec une épaisseur uniforme est un impératif, particulièrement dans le cas où celles-ci sont remplies avec des cristaux liquides de type PDLC. L'épaisseur uniforme de la cellule doit être garantie notamment au moment de l'exposition de celle-ci aux rayonnements ultraviolets pour la polymérisation.

Pour une cellule d'épaisseur nominale de 10 µm par exemple, une variation de l'épaisseur de 2 µm est susceptible d'entraîner une augmentation de la tension de saturation de l'ordre de 1,5 volt.

Un but de la présente invention est donc de fournir un procédé de garnissage de cellules à cristaux liquides qui soit à la fois de mise en oeuvre simple et qui ne présente pas les inconvénients mentionnés ci-dessus.

### Exposé de l'invention

A cet effet, l'invention concerne plus précisément un procédé de garnissage d'une cellule d'affichage à cristaux liquides, caractérisé en ce qu'il comporte les opérations suivantes :
- fourniture d'une cellule d'affichage vide comportant en des extrémités opposées un premier orifice dit de pompage et un second orifice dit de remplissage,
- immersion du second orifice dans un liquide de remplissage comprenant un mélange de monomère et de cristaux liquides, et aspiration par le premier orifice du liquide de remplissage,
- polymérisation du monomère.

Grâce à l'invention, la cellule, ainsi que le liquide de remplissage, ne sont plus contenus dans une enceinte dans laquelle est établi le vide. L'aspiration qui permet de faire monter le liquide de remplissage dans la cellule peut être effectuée avec une dépression réglable et qui est donc compatible avec les caractéristiques et notamment avec la pression de vapeur du liquide de remplissage. A titre d'exemple, l'aspiration peut être réalisée avec une dépression comprise entre 800 (∼8.10⁴Pa) et 100 millibars (∼1.10⁴Pa), et de préférence inférieure ou égale à 500 millibars (5.10⁴Pa) . Après le remplissage de la cellule, le procédé de garnissage peut être poursuivi par une étape de pressage de la cellule afin d'en chasser un éventuel excès de liquide de remplissage. Le pressage est avantageusement un pressage sous vide.

La cellule est alors disposée dans un bloc de pressage et recouverte d'un film. Un vide établi entre le bloc de pressage et le film permet de plaquer ce dernier contre la cellule et y exercer une pression uniforme. L'excès éventuel de liquide de remplissage peut alors s'échapper par le queusot de remplissage ou de pompage. Lors de la réalisation de cellules de type PDLC, le garnissage se poursuit encore par une étape de polymérisation du monomère afin d'obtenir la séparation de phase du mélange monomère-cristaux liquides.

L'opération de polymérisation qui est effectuée en exposant la cellule à un rayonnement ultraviolet peut être réalisée soit en même temps que l'opération de pressage, soit directement à la suite de celle-ci. Lorsqu'on souhaite effectuer simultanément les opérations de pressage et d'exposition de la cellule aux rayonnements ultraviolets, le film utilisé pour le pressage de la cellule est de préférence un film Mylar qui laisse passer les ultraviolets.

D'autres caractéristiques et avantages de l'invention ressortiront plus en détail de la description des figures annexées qui va suivre, donnée à titre illustratif et non limitatif.

### Brève description des figures

- la figure 1 est un éclaté schématique d'une cellule à cristaux liquides vide du type utilisé pour la mise en oeuvre du procédé de l'invention,
- les figures 2 et 3 sont des vues de face schématiques illustrant le remplissage de la cellule conformément à l'invention,
- la figure 4 est une coupe schématique longitudinale de la cellule mise en place dans un bloc de pressage et illustre l'opération de pressage, conformément à l'invention.

### Description détaillée de modes de mise en oeuvre du procédé de l'invention

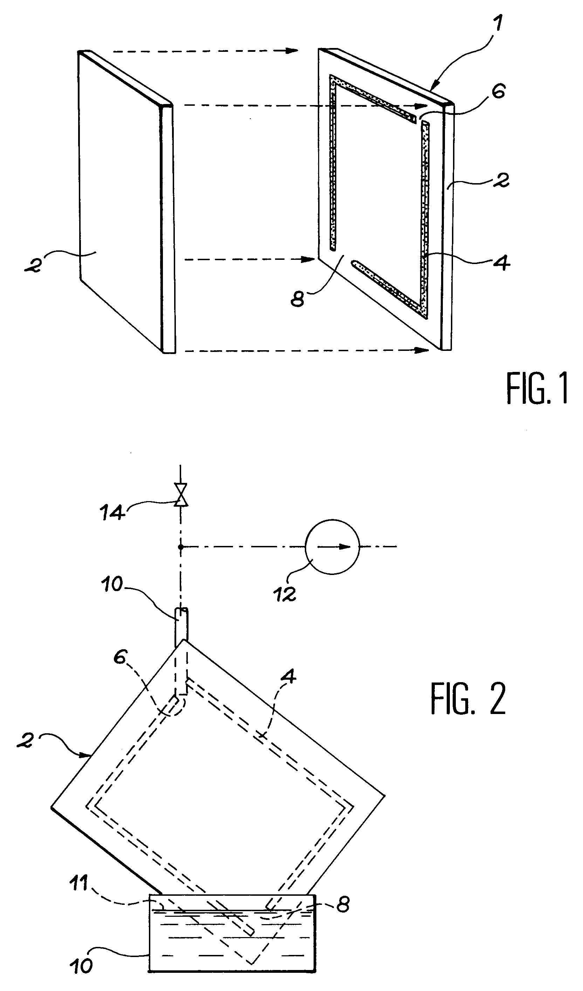

La cellule 1 représentée à la figure 1 comporte deux plaques de verre référencées 2 qui sont reliées entre elles avec un joint de colle 4 disposé en une région sensiblement périphérique des plaques.

Deux discontinuités du joint de colle 4 situées sensiblement sur une diagonale des plaques de verres rectangulaires forment respectivement une ouverture de pompage 6 située dans la partie supérieure de la cellule 1 telle que représentée sur la figure et une ouverture de remplissage 8 située dans la partie inférieure.

Les ouvertures de pompage et de remplissage de la cellule présentent une longueur de l'ordre du millimètre et une largeur de l'ordre d'une dizaine de micromètres. On peut noter aussi, que l'ouverture de remplissage est un peu plus grande que l'ouverture de pompage. Pour des raisons de clarté, les motifs conducteurs des plaques de substrat qui définissent les points images ne sont pas représentés.

Comme le montre la figure 2, l'extrémité de la cellule comportant l'orifice de remplissage 8 est immergée dans une cuve 10 qui contient le liquide de remplissage 11 de la cellule. A titre d'exemple, le liquide de remplissage peut comporter un mélange de 20% en poids de monomère et 80% en poids de cristaux liquides. Un tube 10 relie l'orifice de pompage 6 à une pompe 12, une vanne de régulation 14 permet de faire communiquer également le tube 10 avec l'atmosphère et ainsi de réguler une dépression appliquée dans la cellule au moyen de la pompe 12.

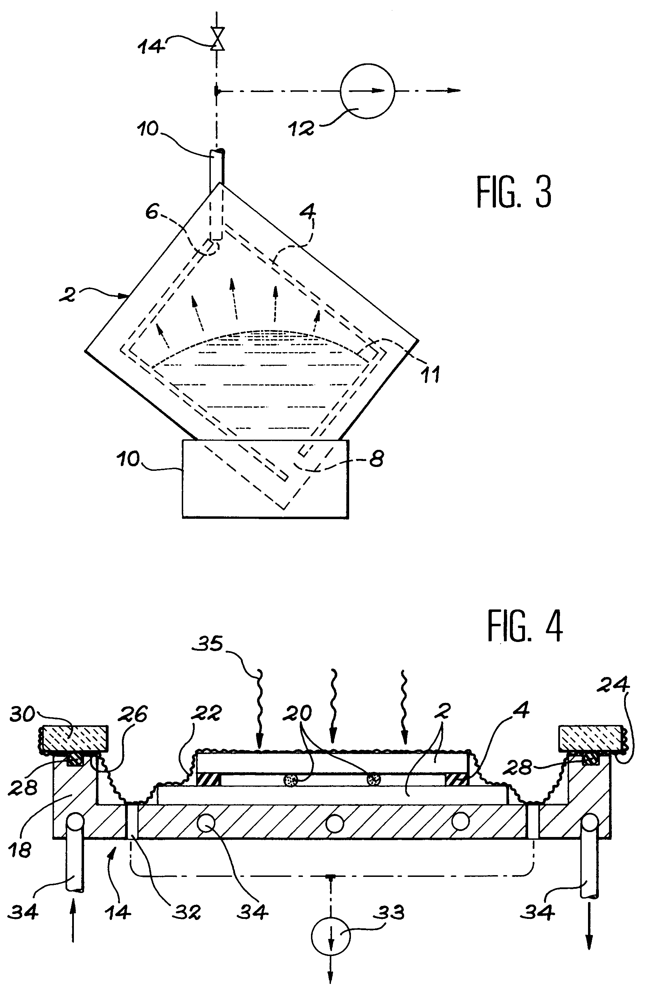

Comme le montre la figure 3, lorsqu'on ferme la vanne 14, l'aspiration de la pompe dans la partie supérieure de la cellule provoque l'introduction du liquide de remplissage 11 par l'orifice de remplissage. Une dépression de 800 à 100 millibars est suffisante et efficace pour le pompage sans pour autant provoquer l'évaporation du monomère. Des références identiques repèrent des éléments déjà décrits par rapport à la figure 2.

Lorsque la cellule est pleine, on ouvre la vanne de régulation 14 pour augmenter la pression jusqu'à la pression atmosphérique, puis le tuyau de pompage 10 est retiré ainsi que la cuve contenant le cristal liquide ou le mélange.

Le remplissage d'une cellule de 10 cm de diagonale dure environ 15 minutes. On observe, dans un certain nombre de cas, que la cellule une fois remplie est gonflée. Ce phénomène est particulièrement prononcé lorsque le liquide de remplissage est un mélange de monomère et de cristaux liquides. Les forces de capillarité sont telles que le mélange entre dans la cellule en provoquant une déformation élastique des substrats de verre.

Afin d'obtenir des cellules d'affichage de bonne qualité, le procédé de garnissage de celles-ci est poursuivi par une opération de pressage de la cellule afin d'en chasser si nécessaire l'excès de liquide de remplissage.

De façon avantageuse, cette opération de pressage peut être effectuée dans un bloc de pressage tel que représenté à la figure 4.

Le bloc de pressage 14 montré en coupe à la figure 4 a la forme générale d'une auge 18 dans laquelle est disposée la cellule 1. La figure permet aussi de distinguer les plaques 2 de la cellule 1 ainsi que le joint de colle 4. On voit également des espaceurs 20 disposés dans la cellule entre les plaques de substrat 2 et qui permettent lors de l'opération de pressage de définir l'épaisseur nominale de la cellule. La cellule remplie est recouverte d'un film 22 ; il s'agit, par exemple d'un film en Mylar (marque déposée) gaufré. Le film recouvre non seulement la cellule d'affichage mais vient également recouvrir les bords 24, 26 du bloc de pressage. Un joint d'étanchéité 28 du bloc de pressage coopère avec un cadre de support 30 du film Mylar afin de réaliser une étanchéité entre ce dernier et le bloc de pressage. Une fois que cette étanchéité est obtenue, l'air situé entre le film de Mylar et la cuve 18 du bloc de pressage est aspiré par des orifices 32 pratiqués dans le fond de la cuve 18 du bloc. L'air est aspiré avec une pompe 33 par exemple avec une dépression de 500 millibars, ce qui a pour effet de plaquer le Mylar contre la cellule. L'excès de liquide de remplissage est chassé par l'orifice de pompage et l'orifice de remplissage de la cellule (non visibles sur cette figure). L'épaisseur de la cellule au bout de quelques instants est parfaitement uniforme et définie par les espaceurs 20.

De façon avantageuse, le film utilisé pour l'opération de pressage est un film en Mylar gaufré. Ce film est intéressant tout d'abord, par ce qu'il est souple, et épouse parfaitement la forme de la cellule à presser, mais aussi parce que le gaufrage permet un pompage efficace de l'air situé entre la cellule et le film. Cet air est pompé grâce aux petites irrégularités du relief du film. Un bon vidage de l'espace entre le film et la cuve est ainsi obtenu bien que le verre soit lisse.

Selon un autre aspect intéressant de l'invention, le Mylar utilisé est transparent aux rayonnements ultraviolets. Il est ainsi possible tout en pressant la cellule de poursuivre l'opération de garnissage de celle-ci en polymérisant le mélange de monomère et de cristaux liquides afin de produire des cristaux liquides dispersés dans du polymère. A cet effet, le bloc de pressage contenant la cellule est positionné sous une lampe de rayonnement 35 ultraviolet pour la polymérisation.

Pour compenser les pertes dues à l'absorption du rayonnement par le film de Mylar, qui sont de l'ordre de 50% pour un film d'une épaisseur de l'ordre de 50 µm, il suffit d'approcher suffisamment la lampe de la cellule.

Il est possible également d'effectuer l'opération de polymérisation à la suite de l'opération de pressage. Dans ce cas, le pompage par les orifices 32 est coupé et le cadre de pressage qui porte le film Mylar est enlevé, puis une lampe de rayonnement ultraviolet est approchée de la cellule. Le fait d'exposer rapidement la cellule aux ultraviolets ne lui laisse pas le temps de se regonfler.

Selon un aspect particulier de l'invention, un masque opaque peut être déposé sur la cellule afin d'en recouvrir la zone périphérique comportant le joint de colle. Le fait de recouvrir cette région permet d'éviter que le joint de colle ne fasse localement office de guide optique pour le rayonnement ultraviolet. Lors de l'insolation il est effectivement important d'avoir une énergie d'insolation uniformément répartie sur l'ensemble de la cellule. Dans le cas où l'opération de pressage et l'opération de polymérisation ont lieu simultanément, il est possible ainsi d'équiper le bloc de pressage avec un film Mylar gaufré dont la partie qui recouvre la région où se trouve le joint de colle d'assemblage est opaque.

Dans le cas de l'application du procédé de l'invention à la réalisation de cellules PDLC pour lesquelles la tension de seuil dépend de la température à laquelle a lieu la polymérisation, il est possible d'équiper le bloc de pressage avec des moyens de thermostat. A cet effet, le bloc de pressage peut être parcouru par une conduite 34 dans laquelle on fait circuler un liquide glycolé, par exemple.

Finalement, grâce à l'invention, il est possible de garnir des cellules à cristal liquide sans soumettre le liquide de remplissage à des contraintes de dépression susceptibles d'en altérer les propriétés. Il est en outre possible d'obtenir des cellules parfaitement uniformes et d'épaisseur contrôlée.

## Revendications

1. Procédé de garnissage d'une cellule (1) d'affichage à cristaux liquides, caractérisé en ce qu'il comporte les opérations suivantes :
- fourniture d'une cellule d'affichage (1) vide comportant en des extrémités opposées un premier orifice (6) dit de pompage et un second orifice (8) dit de remplissage,
- immersion du second orifice (8) dans un liquide de remplissage comprenant un mélange de monomère et de cristaux liquides, et aspiration par le premier orifice (6) du liquide de remplissage,
- polymérisation du monomère.

2. Procédé selon la revendication 1, caractérisé en ce qu'il comporte en outre une opération de pressage de la cellule (1) pour en chasser un éventuel excès de liquide de remplissage.

3. Procédé selon la revendication 2, caractérisé en ce que l'opération de polymérisation et l'opération de pressage ont lieu simultanément.

4. Procédé selon la revendication 2, caractérisé en ce que l'opération de polymérisation a lieu à la suite de l'opération de pressage.

5. Procédé selon l'une des revendications 2 à 4, caractérisé en ce que, pour réaliser l'opération de pressage, la cellule est disposée dans un bloc de pressage (18) et recouverte d'un film (22), et un vide est établi entre le bloc de pressage (8) et le film (22) afin de plaquer le film sur la cellule (1).

6. Procédé selon l'une quelconque des revendications précédentes, caractérisé en ce que l'opération d'aspiration est effectuée avec une dépression inférieure ou égale à 500 millibars.
